# EUROPEAN PATENT SPECIFICATION

(11) **EP 2 644 080 B1**
(45) Date of publication and mention of the grant of the patent: **23.03.2016**
(21) Application number: 12425067.1
(22) Date of filing: 29.03.2012
(51) Int. Cl.: A47L 15/42

(54) **Apparatus for recovering the washing and/or rinsing liquid in a dishwasher**
Vorrichtung zur Rückgewinnung der Wasch- und/oder Spülflüssigkeit in einer Geschirrspüler
Appareil permettant de récupérer le liquide de lavage et/ou de rinçage dans un lave-vaisselle

(43) Date of publication of application: 02.10.2013
(73) Proprietor: Candy S.p.A., 20900 Monza (MB) (IT)
(72) Inventor: Fumagalli, Aldo, 20900 Monza MB (IT)
(74) Representative: Perani, Aurelio

(56) References cited:
- EP-A1- 0 518 806
- EP-A1- 0 911 439
- EP-A1- 2 261 414
- EP-A1- 2 277 430
- EP-A2- 1 197 593
- EP-A2- 1 240 863
- CN-A- 101 642 361
- DE-A1-102009 028 280
- US-A1- 2004 226 581
- US-B1- 8 038 802

## Description

The present invention relates to an apparatus for recovering the washing and/or rinsing liquid in a dishwashing machine comprising a tub in which the dishes are washed and/or rinsed, at least one discharge pump, with associated motor, for discharging the washing and/or rinsing liquid from the tub and the machine on completion of an operating cycle, together with an auxiliary tank for recovering at least some of the liquid used in a machine operating cycle for subsequent use thereof.

The invention also relates to a dishwashing machine incorporating said apparatus. Dishwashers provided with an auxiliary tank into which some of the washing liquid, or preferably some of the liquid used during a rinse cycle, is recovered are known.

Examples of such machines are shown in EP-A-0 771 898, in EP-A-0 669 097, in EP-A-0 800 785 as well as in EP-A-1 699 344.

According to the prior art shown in the above-stated documents, the water is recovered, for example during the rinsing steps, normally by using the recirculating pump when the outlet thereof is also open on the pathway which supplies the machine's rotors in the interior of the tub.

Using the recirculating pump during rinsing operating steps for recovering some of the liquid into the auxiliary tank is considered to be most appropriate in this specific technological field given that the water used in the rinse cycles is, in relative terms, cleaner than that used during washing cycles and in particular because it is drawn in through the filter means with which the dishwasher is equipped.

However, the quantity recovered by the recirculating pump during the rinse cycles when the rotors are also in operation is somewhat small, to the extent that it does not justify the costs associated with providing an auxiliary recovery tank in the machine.

It is also known using the discharge pump for recovering some of the liquid into the auxiliary tank, as described in document US 8038802.

The object of the present invention is to remedy the above-stated disadvantage by ensuring that the quantity of water recovered is such that it justifies the costs of providing an auxiliary tank for recovering the liquid in the machine and at the same time that the quality of the recovered liquid is good and comparable with that obtained at the end of a rinse cycle.

Said object is achieved by means of an apparatus according to claim 1 below.

The features and advantages of the present invention will become clearer from the following detailed description of an embodiment, provided by way of non-limiting example, with reference to the following figures, in which:
- Figure 1 shows a schematic partial vertical section through the bottom of a dishwashing machine incorporating the apparatus according to the invention in the position in which the washing and/or rinsing fluid is directed towards the drain;
- Figure 2 shows a schematic partial vertical section through the bottom of the tub of a dishwashing machine incorporating the apparatus according to the invention in the position in which the washing and/or rinsing fluid is directed towards recovery tank.

With reference to the above-stated figures, 1 designates the bottom of the tub 2 of a conventional dishwasher, in the interior of which are located conventional rotors for distributing the washing or rinsing liquid onto the dishes in the interior of the tub 2.

One of the above-mentioned rotors, specifically the one located close to the bottom 1 of the tub, is labelled 3. Said rotor is provided with conventional jets 4.

At least one second rotor, not shown, is arranged close to the top of the tub 2.

The bottom 1 of the tub is provided with a filter zone 5, capable of retaining the larger particles suspended in the liquid during the washing cycles. Beneath said filter zone, the bottom extends into a sump 6 which is closed by a casing element 7 which will be described in detail below.

The sump 6 comprises the tubular housing 8 in which is inserted the fine filtration device of the machine, labelled 9 overall.

To the side of the tub 2, the dishwashing machine comprises an auxiliary tank 10 for recovering a certain quantity of the washing and/or rinsing liquid which may be used in a subsequent step of the operating cycles.

The casing element 7 comprises a discharge pump 11, driven by the associated electric motor 12, which pump is connected via the intake duct 13 thereof with the interior of the sump 6, which collects the washing liquid draining down from the tub 2.

The pump 11, for example of the centrifugal type, is connected to an outlet line 14 located in the casing element 7 in which is in turn located the housing 15 for an actuator 16, for example of the thermal type.

The free end of the rod 18 of the actuator 16 bears an obturator 17. On the casing element 7 is mounted a fitting 19 which, on one side, via the opening 20, is connected with the outlet line 14 of the pump 11 while, on the other side, via the opening 21, it is connected with a drain external to the tub 2 and the dishwashing machine.

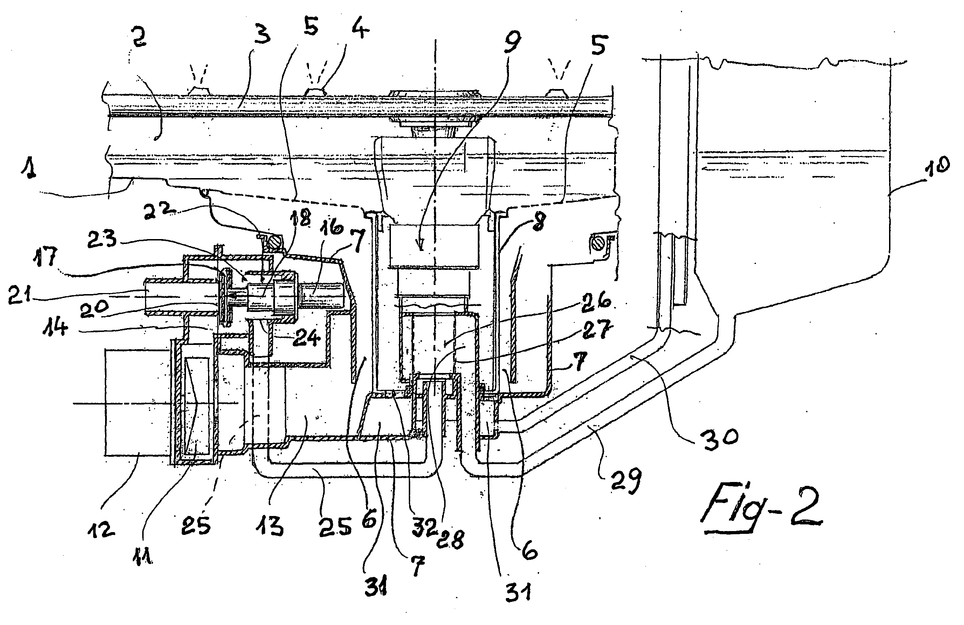

With particular reference to Figure 2, it will be noted that the rod 18 of the actuator 16 extends into a chamber 22 which, by means of the opening 23, is connected with the outlet line 14 of the pump 11, while, via the opening 24, it is connected with a line 25.

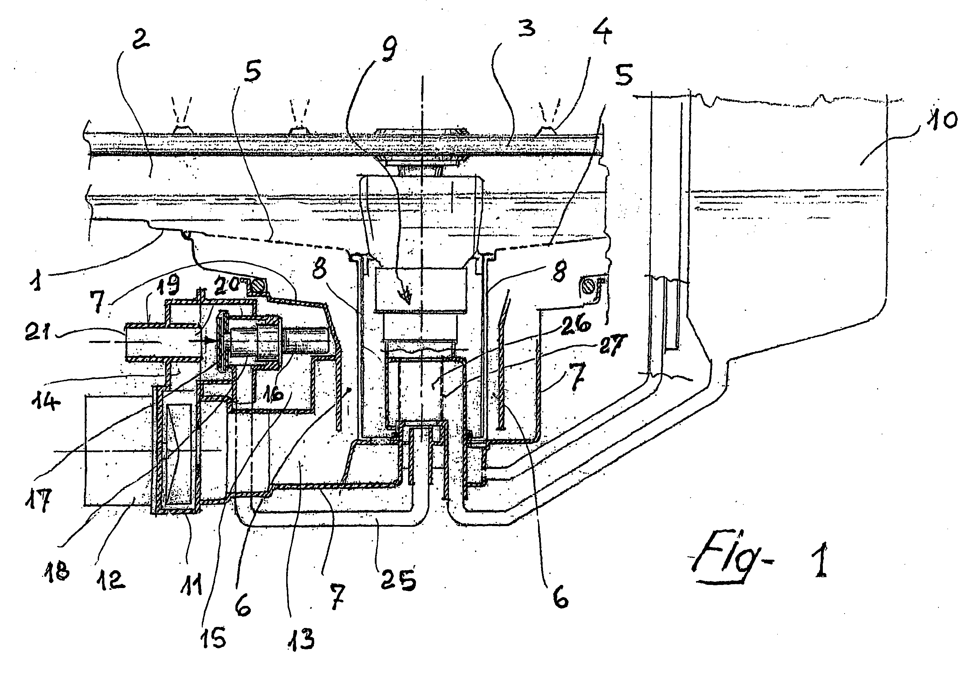

The obturator 17, driven by the actuator 16, may be displaced from the position in which it closes the opening 23 and thus keeps the opening 20 open, as shown in Figure 1, into the opposite position in which it keeps the opening 20 closed and simultaneously opens the opening 23.

As will be understood from the above, depending on the position of the obturator 17, the liquid drawn in by the discharge pump 11 may be conveyed towards the drain 21 or towards the line 25.

The line 25 reaches the internal chamber 26 of a fine filter 27 which is positioned, as shown in Figures 1 and 2, on the axial extension of the recirculating filter 9. This position of the filter 27 is particularly convenient and effective for maintenance purposes, since it is made accessible and may be cleaned at the same time as the periodic recirculation filter 9 cleaning operations involving just one intervention on the machine.

**According to an embodiment which is not part of the present invention,** the filter 27 **is positioned** beside the filter 9, for example in a position parallel to the latter in the collecting sump 6.

The outer chamber 28 of the fine filter 27 is connected to a line 29 which opens into the auxiliary tank 10. In practice, the line 25 and the line 29 may be regarded as a single line intended for filling the tank 10 with the filter 27 being interposed.

A further line 30 connects the interior of the tank 10, for example by means of a siphon device, not shown, with the cavity 31 of the casing element 7, which cavity is in communication by means of an opening 32, with the housing 8 of the filter 9 and, by means of the latter, with the tub 2.

During operation of the dishwashing machine, it is possible by means of the apparatus according to the invention to recover a specific quantity of washing or rinsing liquid, for example at the end of respective cycles, by sending the liquid to the tank 10 by means of the lines 25 and 29 and the filter 27. The obturator 17 being in the position shown in Figure 2, this is achieved in that the liquid drawn in by the discharge pump 11 from the bottom of the tub is conveyed, instead of being sent to the drain, through the openings 23 and 24 into the line 25 and thence onwards into the tank 10.

The liquid accumulated in the tank 10 may be reused through the line 30, which introduces it directly into tub 2 through the chamber 31 and the opening 32 or indeed through said outlet line 29, in which case the liquid is passed through the filter 27 of the outer annular chamber 28 towards the internal chamber 26 and thence onwards towards the discharge pump 11. Using this latter method for recovering the liquid also provides counter-current washing of the filter surface of the filter 27

The openings 20 and 23 are opened and closed in response to commands sent to the actuator 16 by the appropriately programmed conventional control unit, not shown, of the dishwashing machine.

According to the invention, it is possible to use an appreciable quantity of liquid by taking it from the tub on completion of a washing cycle and, instead of disposing of it to the drain, making it suitable for subsequent use by the provision of filter means located on the auxiliary tank filling line.

The liquid may, of course, also be recovered on completion of a rinse cycle.

The materials and dimensions may be any such as are required without consequently extending beyond the scope of the present invention as described above and claimed below.

## Claims

1. An apparatus for recovering the washing and/or rinsing liquid of a dishwashing machine comprising:
a tub (2) in which the dishes are washed and/or rinsed;
the **bottom of the tub (2) being provided with a filter zone (5) capable of retaining the larger particles suspended in the liquid during washing cycles;**
**beneath said filter zone (5) being provided a sump (6) comprising a tubular housing (8)** in **which it is inserted a fine filtration device (9) of a recirculation circuit;**
at least one discharge pump (11), with associated motor (12), for discharging the washing and/or rinsing liquid from the tub and the machine on completion of an operating cycle, and **connected via an intake duct (13) with the interior of the sump (6);**
an auxiliary tank (10) for recovering at least some of the liquid used in an operating cycle of the machine for subsequent use thereof,
**characterised in that the apparatus further comprises**
a first line (25, 29) connecting **an** outlet (14) of said discharge pump (11) with said auxiliary tank (10),
a second line (30) connecting said auxiliary tank (10) with the interior of the tub (2), flow diverter means (16, 17, 18) located downstream of said discharge pump (11) **and designed for** sending the flow of liquid entirely towards said auxiliary tank (10) or entirely towards **a** drain (21), filter means (26, 27, 28), for the liquid directed towards the auxiliary tank (10), placed in line with the filter device (9) **of the dishwasher recirculation circuit,**
said first line (25) reaching an internal chamber (26) of a fine filter (27) of said filter means which is positioned on an axial extension of the filtration device (9) for the recirculation circuit.

2. An apparatus according to claim 1, **characterised in that** said flow diverter means comprise an obturator (17) and an actuator (16) for driving it, said obturator (17) being displaceable from a first position in which it shuts off said first line (25) connected to said auxiliary tank (10) for recovering the liquid and simultaneously opens the outlet (14) of the discharge pump (11) towards the drain (21) and a second position in which it opens said first line (25) of the recovery tank (10) and simultaneously shuts off the outlet (14) of the pump (11) towards the drain (21).

3. An apparatus according to claims 1 and 2, **characterised in that** said flow diverter means comprise a thermal actuator (16) connected to an obturator (17).

4. **An apparatus according to claim 1, wherein said sump (6) is closed by a casing element (7).**

5. A dishwashing machine comprising an apparatus for recovering the washing and/or rinsing liquid in accordance with one or more of the preceding claims.

## Patentansprüche

1. Vorrichtung zur Rückgewinnung der Wasch- und/oder Spülflüssigkeit von Geschirrspülern, umfassend:
eine Wanne (2), in der das Geschirr gewaschen und/oder abgespült wird;
wobei der Boden der Wanne (2) mit einem Filterbereich (5) versehen ist, der in der Lage ist, während der Waschzyklen größere, in der Flüssigkeit schwimmende Partikel zurückzuhalten;
wobei unterhalb des Filterbereichs (5) ein Sammelbehälter (6) vorgesehen ist, der ein rohrförmiges Gehäuse (8) umfasst, in das eine Feinfiltervorrichtung (9) eines Rückführungskreislaufs eingesetzt ist;
mindestens eine Entleerungspumpe (11), die mit einem Motor (12) zum Abpumpen der Wasch- und/oder Spülflüssigkeit aus der Wanne und des Geschirrspülers nach Beendigung eines Betriebszyklus angeschlossen und über eine Ansaugleitung (13) mit dem Inneren des Sammelbehälters (6) verbunden ist;
einen Zusatzbehälter (10) für die Rückgewinnung mindestens eines Teils der in einem Betriebszyklus der Maschine verwendeten Flüssigkeit für die spätere Verwendung derselben,
**dadurch gekennzeichnet, dass** die Vorrichtung ferner Folgendes umfasst
eine erste Leitung (25, 29), die einen Auslauf (14) der Entleerungspumpe (11) mit dem Zusatzbehälter (10) verbindet,
eine zweite Leitung (30), die den Zusatzbehälter (10) mit dem Inneren der Wanne (2) verbindet,
Durchflussumlenkmittel (16, 17, 18), die der Entleerungspumpe (11) nachgelagert angeordnet und dazu bestimmt sind, den Flüssigkeitsfluss gänzlich in Richtung des Zusatzbehälters (10) oder gänzlich in Richtung des Ablaufs (21) zu leiten,
Filtermittel (26, 27, 28) für die zum Zusatzbehälter (10) geleitete Flüssigkeit, die in einer Reihe mit der Filtervorrichtung (9) des Rückführungskreislaufs des Geschirrspülers angeordnet sind,
wobei die erste Leitung (25) sich in eine innere Kammer (26) eines Feinfilters (27) der Filtermittel erstreckt, die in einer axialen Verlängerung der Filtervorrichtung (9) des Rückführungskreislaufs angeordnet sind.

2. Vorrichtung nach Anspruch 1, **dadurch gekennzeichnet, dass** die Durchflussumlenkmittel eine Abdichtung (17) und ein Stellglied (16) zur Betätigung derselben umfassen, wobei die Abdichtung (17) von einer ersten Stellung, in der sie die erste, an den Zusatzbehälter (10) zur Rückgewinnung der Flüssigkeit angeschlossene Leitung (25) absperrt und gleichzeitig den Abfluss (14) der Entleerungspumpe (11) zum Ablauf (21) öffnet, in eine zweite Stellung verstellt werden kann, in der sie die erste Leitung (25) des Sammelbehälters (10) öffnet und gleichzeitig den Abfluss (14) der Pumpe (11) zum Ablauf (21) hin absperrt.

3. Vorrichtung nach Anspruch 1 oder 2, **dadurch gekennzeichnet, dass** die Durchflussumlenkmittel ein Thermo-Stellglied (16) umfassen, das mit einer Abdichtung (17) verbunden ist.

4. Vorrichtung nach Anspruch 1, bei der der Sammelbehälter (6) durch ein Mantelelement (7) verschlossen ist.

5. Geschirrspüler, umfassend eine Vorrichtung zur Rückgewinnung der Wasch- und/oder Spülflüssigkeit gemäß einem oder mehreren der vorstehenden Ansprüche.

## Revendications

1. Appareil pour la récupération du liquide de lavage et/ou de rinçage d'un lave-vaisselle comprenant :
une cuve (2) dans laquelle la vaisselle est lavée et/ou rincée ;
le fond de la cuve (2) étant munie d'une zone de filtre (5) capable de retenir les plus grandes particules en suspension dans le liquide durant des cycles de lavage ;
au-dessous de ladite zone de filtre (5) étant disposé un puisard (6) comprenant un logement tubulaire (8) dans lequel est inséré un dispositif de filtration fine (9) d'un circuit de recirculation ;
au moins une pompe d'évacuation (11), avec moteur associé (12), pour évacuer le liquide de lavage et/ou de rinçage de la cuve et de la machine à la fin d'un cycle de fonctionnement, et connectée par l'intermédiaire d'un conduit d'aspiration (13) avec l'intérieur du puisard (6) ;
un réservoir auxiliaire (10) pour récupérer au moins une partie du liquide utilisé dans un cycle de fonctionnement de la machine pour son utilisation successive,
**caractérisé en ce que** l'appareil comprend en outre une première ligne (25, 29) connectant une sortie (14) de ladite pompe d'évacuation (11) avec ledit réservoir auxiliaire (10),
une deuxième ligne (30) connectant ledit réservoir auxiliaire (10) avec l'intérieur de la cuve (2),
des moyens de dérivation d'écoulement (16, 17, 18) situés en aval de ladite pompe d'évacuation (11) et
conçus pour envoyer le flux de liquide totalement vers ledit réservoir auxiliaire (10) ou totalement vers une évacuation (21),
des moyens de filtre (26, 27, 28), pour le liquide dirigé vers le réservoir auxiliaire (10), placé en ligne avec le dispositif de filtre (9) du circuit de recirculation du lave-vaisselle,
ladite première ligne (25) atteignant une chambre interne (26) d'un filtre fin (27) desdits moyens de filtre, qui est positionnée sur une extension axiale du dispositif de filtration (9) pour le circuit de recirculation.

2. Appareil selon la revendication 1, **caractérisé en ce que** lesdits moyens de dérivation d'écoulement comprennent un obturateur (17) et un actionneur (16) pour le commander, ledit obturateur (17) étant déplaçable à partir d'une première position dans laquelle il ferme ladite première ligne (25) connectée audit réservoir auxiliaire (10) pour récupérer le liquide et ouvrir simultanément la sortie (14) de la pompe d'évacuation (11) vers l'évacuation (21) et une deuxième position dans laquelle il ouvre ladite première ligne (25) du réservoir de récupération (10) et ferme simultanément la sortie (14) de la pompe (11) vers l'évacuation (21).

3. Appareil selon les revendications 1 et 2, **caractérisé en ce que** lesdits moyens de dérivation d'écoulement comprennent un actionneur thermique (16) connecté à un obturateur (17).

4. Appareil selon la revendication 1, dans lequel ladite pompe (6) est enfermée par un élément formant boîtier (7).

5. Lave-vaisselle comprenant un appareil pour la récupération du liquide de lavage et/ou de rinçage selon une ou plusieurs des revendications précédentes.
